# EUROPEAN PATENT APPLICATION

(11) **EP 4 749 339 A1**
(43) Date of publication of application: **27.05.2026**
(21) Application number: 23945877.1
(22) Date of filing: 19.07.2023
(51) Int. Cl.: G02B 6/04, G02B 6/44

(54) **OPTICAL FIBER UNIT AND OPTICAL FIBER CABLE**

(71) Applicant: Sumitomo Electric Industries, Ltd., Osaka-shi, Osaka 541-0041 (JP)
(72) Inventor: SATO Fumiaki, Osaka-shi, Osaka 541-0041 (JP); TSUCHIYA Kenta, Osaka-shi, Osaka 541-0041 (JP); MINATO Keisuke, Osaka-shi, Osaka 541-0041 (JP); SHIMODA Yuuki, Osaka-shi, Osaka 541-0041 (JP); TAKAHASHI Ken, Osaka-shi, Osaka 541-0041 (JP)
(74) Representative: Müller-Boré & Partner Patentanwälte PartG mbB
(86) International application number: PCT/JP2023/026435
(87) International publication number: WO 2025/017874

(57) **Abstract**

An optical fiber unit includes: a plurality of optical fibers or optical fiber ribbons; and a plastic film having a thickness of less than 0.1 mm and covering a periphery of the plurality of optical fibers or the plurality of optical fiber ribbons. The plastic film includes a base material and an adhesive resin layer provided on at least one side of the base material. The adhesive resin layer has a melting point of lower than 200°C. The plastic film is formed in an annular shape in a cross-sectional view by partially melting a part of the plastic film by the adhesive resin layer.

## Description

### TECHNICAL FIELD

The present disclosure relates to an optical fiber unit and an optical fiber cable.

### BACKGROUND ART

Patent Literature 1 describes a cable in which a rollable optical fiber ribbon is arranged in a circular unit tube.

### CITATION LIST

### PATENT LITERATURE

Patent Literature 1: JP2019-124936A

### SUMMARY OF INVENTION

### SOLUTION TO PROBLEM

An optical fiber unit according to one aspect of the present disclosure, including:
a plurality of optical fibers or optical fiber ribbons; and
a plastic film having a thickness of less than 0.1 mm and covering a periphery of the plurality of optical fibers or the plurality of optical fiber ribbons, in which
the plastic film includes a base material and an adhesive resin layer provided on at least one side of the base material,
the adhesive resin layer has a melting point of lower than 200°C, and
the plastic film is formed in an annular shape in a cross-sectional view by partially melting a part of the plastic film by the adhesive resin layer.

An optical fiber cable according to one aspect of the present disclosure, including:
a plurality of the optical fiber unit described above; and
a cable sheath covering the plurality of the optical fiber unit.

### BRIEF DESCRIPTION OF DRAWINGS

[FIG. 1] FIG. 1 is a perspective view of an optical fiber unit.
[FIG. 2] FIG. 2 is a cross-sectional view of the optical fiber unit.
[FIG. 3] FIG. 3 is a partially enlarged view of III in FIG. 2.
[FIG. 4] FIG. 4 is a schematic view of a manufacturing apparatus for manufacturing the optical fiber unit.
[FIG. 5] FIG. 5 illustrates another example of a plastic film.
[FIG. 6] FIG. 6 illustrates an example of a form of an adhesive resin layer in a plastic film.
[FIG. 7] FIG. 7 illustrates another example of the form of the adhesive resin layer in a plastic film.
[FIG. 8] FIG. 8 is a cross-sectional view of an optical fiber cable.

### DESCRIPTION OF EMBODIMENTS

### Problem to be Solved by Present Disclosure

In an optical fiber unit having a loose tube structure, a tube may be thinned in order to mount an optical fiber at a high density. However, when the tube is excessively thinned, an application cleft or the like of a resin used for forming the tube is likely to occur during extrusion molding.

### Effects of Present Disclosure

According to the present disclosure, it is possible to provide an optical fiber unit and an optical fiber cable in which the mounting density and the manufacturing yield are improved.

### Description of Embodiments of Present Disclosure

First, embodiments of the present disclosure will be listed and described.
(1) An optical fiber unit according to one aspect of the present disclosure, including:
   a plurality of optical fibers or optical fiber ribbons; and
   a plastic film having a thickness of less than 0.1 mm and covering a periphery of the plurality of optical fibers or the plurality of optical fiber ribbons, in which
   the plastic film includes a base material and an adhesive resin layer provided on at least one side of the base material,
   the adhesive resin layer has a melting point of lower than 200°C, and
   the plastic film is formed in an annular shape in a cross-sectional view by partially melting a part of the plastic film by the adhesive resin layer.

According to the optical fiber unit, the plurality of optical fibers or the plurality of optical fiber ribbons are covered with the thin plastic film having a thickness of less than 0.1 mm, and thus a mounting density of the optical fiber can be improved. The plastic film is formed in an annular shape in a manner of covering the periphery of the plurality of optical fibers or the plurality of optical fiber ribbons by adhesion by the adhesive resin layer, and thus the occurrence of molding defects is prevented and a manufacturing yield of the optical fiber unit is improved as compared with a case in which a tube is formed around the plurality of optical fibers or the plurality of optical fiber ribbons by extrusion molding.

The thickness is an average value, and is, for example, an average value of thicknesses measured at any ten points.

(2) The optical fiber unit according to (1), in which
the adhesive resin layer may be formed of an adhesive polyolefin resin.

By using the adhesive polyolefin resin, an adhesive layer having a melting point of lower than 200°C can be formed at any position on the base material of the plastic film, and sufficient adhesive strength can be secured at a temperature of lower than 200°C.

(3) The optical fiber unit according to (1) or (2), in which
the plastic film includes an overlapping portion in which the plastic films overlap each other at a part in a circumferential direction covering a periphery of the plurality of optical fibers or the plurality of optical fiber ribbons, and
the adhesive resin layer may be formed only on the overlapping portion.

According to the configuration, the adhesive resin layer is not formed in portions other than the overlapping portion, and thus the plastic film can be prevented from adhering to the optical fiber or the optical fiber ribbon at portions other than the overlapping portion.

(4) The optical fiber unit according to any one of (1) to (3), in which
the plastic film includes an overlapping portion in which the plastic films overlap each other at a part in a circumferential direction covering a periphery of each of the plurality of optical fibers or the plurality of optical fiber ribbons, and
the overlapping portion may have a width of 10% or more and 30% or less with respect to a width of the plastic film in a transverse direction.

By setting the width of the overlapping portion to be 10% or more with respect to the width of the plastic film in the transverse direction, the overlapping portions are reliably adhered, and thus it is easy to maintain a state in which the plastic films are sufficiently adhered to each other. By setting the width of the overlapping portion to be 30% or less with respect to the width of the plastic film in the transverse direction, the optical fiber unit can be easily disassembled.

(5) The optical fiber unit according to any one of (1) to (4), in which
the plastic film includes an overlapping portion in which the plastic films overlap each other at a part in a circumferential direction covering a periphery of the plurality of optical fibers or the plurality of optical fiber ribbons, and
an end portion of the plastic film in a transverse direction which constituting the overlapping portion may be not provided with the adhesive resin layer.

The end portion of the plastic film is formed with a portion that is not adhered by the adhesive resin layer at the end portion of the overlapping portion in the circumferential direction, and thus it is easy to pinch the portion that is not adhered and to disassemble the optical fiber unit.

(6) The optical fiber unit according to any one of (1) to (5), in which
a part of the plastic film in a longitudinal direction may be formed with a cleft.

A part of the plastic film in the longitudinal direction is formed with a cleft, and thus an operation of taking out the optical fiber or the optical fiber ribbon at the time of construction is facilitated.

(7) The optical fiber unit according to any one of (1) to (6), further including:
a water absorbing fiber extending along the plurality of optical fibers or the plurality of optical fiber ribbons, in which
the plastic film may be formed in a manner of covering the water absorbing fiber in a state of being in contact with the water absorbing fiber.

The plastic film is formed in a manner of covering the water absorbing fiber in a state of being in contact with the water absorbing fiber, and thus it is possible to prevent water from being transferred inside the plastic film and entering the optical fiber unit in the longitudinal direction.

(8) The optical fiber unit according to any one of (1) to (7), in which
a resin constituting surfaces of the plurality of optical fibers or the plurality of optical fiber ribbons may contain a release agent.

The release agent contained in the resin constituting the surfaces of the plurality of optical fibers or the plurality of optical fiber ribbons can prevent the optical fiber or the optical fiber ribbon and the plastic film from sticking unintentionally.

(9) The optical fiber unit according to any one of (1) to (8), in which
the plastic film may be made of a material having flame retardance with a limitation oxygen index of 40 or more.

The plastic film is made of a material having flame retardance with a limitation oxygen index of 40 or more, and thus the entire optical fiber unit is good in flame retardance.

(10) The optical fiber unit according to any one of (1) to (9), in which
an optical fiber mounting density may be 10 cores/mm² or higher in the optical fiber unit.

The optical fiber unit having the above configuration is effective to implement an optical fiber unit in which the optical fiber mounting density in the optical fiber unit is 10 cores/mm² or higher.

The mounting density is obtained by dividing a core number of the optical fiber included in the optical fiber unit by a cross-sectional area of the optical fiber unit including the plastic film.

(11) The optical fiber unit according to any one of (1) to (10), in which
the plastic film includes an overlapping portion in which the plastic films overlap each other at a part in a circumferential direction covering a periphery of the plurality of optical fibers or the plurality of optical fiber ribbons, and
an adhesive portion on which the adhesive resin layer is formed and a non-adhesive portion on which the adhesive resin layer is not formed may be alternately provided in the overlapping portion in a longitudinal direction of the optical fiber unit.

The non-adhesive portion is provided intermittently, and thus disassemblability of the optical fiber unit is improved.

(12) The optical fiber unit according to any one of (1) to (11), in which
the plastic film may be formed of biodegradable plastic.

The plastic film is formed of biodegradable plastic, and thus an influence on a natural environment can be reduced in a process after use of the optical fiber unit.

(13) The optical fiber unit according to any one of (1) to (12), in which
a water absorbing polymer may be applied to an outer surface of the plastic film.

The water absorbing polymer is applied to the outer surface of the plastic film, and thus the optical fiber unit is good in water resistance.

(14) The optical fiber unit according to any one of (1) to (13), in which
a two-dimensional code configured to access identification information on the optical fiber unit may be applied to an outer surface of the plastic film.

The two-dimensional code is applied to the outer surface of the plastic film, and thus it is easy to access the identification information on the optical fiber unit.

(15) The optical fiber unit according to any one of (1) to (14), in which
the plastic film includes an overlapping portion in which the plastic films overlap each other at a part in a circumferential direction covering a periphery of the plurality of optical fibers or the plurality of optical fiber ribbons, and
the overlapping portion may be formed in a spiral shape in a longitudinal direction of the optical fiber unit.

The overlapping portion is formed in a spiral shape in the longitudinal direction of the optical fiber unit, and thus is arranged without being concentrated on a part of the optical fiber unit in the circumferential direction. Accordingly, when the optical fiber unit is bent, the stress is dispersed without being concentrated on a part of the optical fiber unit, and thus the plurality of optical fibers or the plurality of optical fiber ribbons can be prevented from protruding unintentionally from the plastic film.

(16) The optical fiber unit according to any one of (1) to (15), in which
the plastic film may be colored in two or more colors.

The plastic film is colored in two or more colors, and thus the identifiability of the optical fiber unit is improved. Coloring is easier than coloring the optical fiber unit by covering the colored resin.

(17) An optical fiber cable according to one aspect of the present disclosure, including:
a plurality of the optical fiber unit according to any one of (1) to (16); and
a cable sheath covering the plurality of the optical fiber unit.
According to the optical fiber cable, the mounting density of the optical fiber can be improved, and the manufacturability of the optical fiber cable can be improved.

### Details of Embodiments of Present Disclosure

Specific examples of an optical fiber unit and an optical fiber cable according to an embodiment of the present disclosure will be described below with reference to the drawings. The present invention is not limited to these exemplifications, but is indicated by the scope of claims, and is intended to include all modifications within a scope and meaning equivalent to the scope of claims.

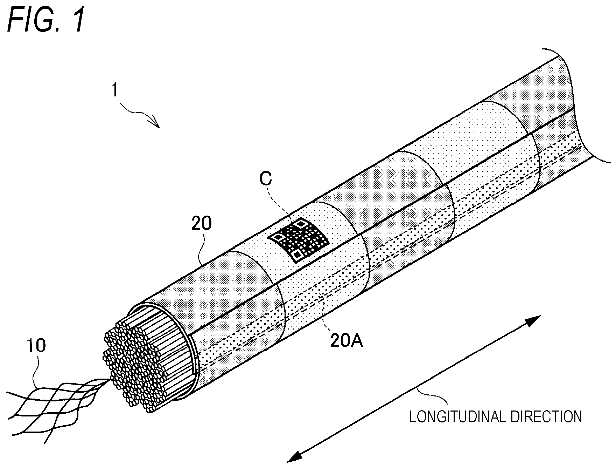

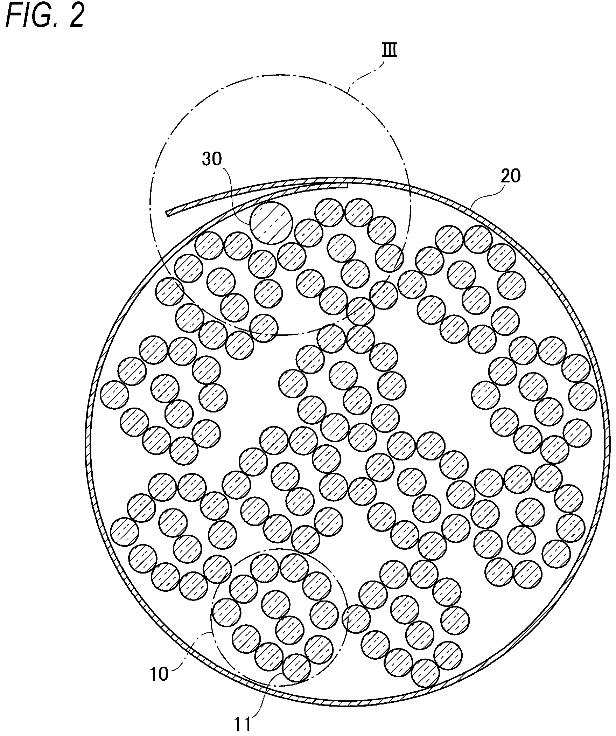

FIG. 1 is a perspective view of an optical fiber unit 1. FIG. 2 is a cross-sectional view of the optical fiber unit 1. The optical fiber unit 1 includes a plurality of bundled optical fiber ribbons 10, and a plastic film 20 covering the optical fiber ribbon 10 and a water absorbing fiber 30.

The optical fiber ribbon 10 includes a plurality of optical fibers (an example of an optical fiber) 11. In the present embodiment, twelve optical fibers 11 are arranged in parallel to form the optical fiber ribbon 10. In the optical fiber unit 1, twelve optical fiber ribbons 10 are provided, and the number of the optical fibers 11 included in the optical fiber unit 1 is 144. The optical fiber ribbon 10 may be implemented by, for example, intermittently bonding adjacent optical fibers 11 along a longitudinal direction of the optical fiber unit 1. The optical fiber 11 includes a glass fiber including a core and a clad, and a resin layer covering the glass fiber. The resin layer may include a colored layer. A diameter of the glass fiber is usually about 125 µm. A diameter of the optical fiber 11 is, for example, 245 µm or more and 265 µm or less, and is, for example, 180 µm or more and 220 µm or less when the diameter of the optical fiber 11 is small.

A resin constituting a surface of the optical fiber ribbon 10 may contain a release agent. The release agent may be, for example, silicon. In the optical fiber unit 1, an optical fiber mounting density indicating the core number of the optical fiber in a cross-sectional area of the optical fiber unit 1 may be 10 cores/mm² or higher. The optical fiber unit 1 may include a plurality of single-core optical fibers 11 instead of the optical fiber ribbon 10. In this case, it is preferable that an outermost layer of the optical fiber 11 contains a release agent.

The plurality of optical fibers 11 included in the optical fiber unit 1 are bundled in a form of the optical fiber ribbon 10 so that an outer shape of a collected cross section is substantially circular, and a periphery is covered with the plastic film 20. That is, the plastic film 20 is formed in an annular shape in a cross-sectional view. The plastic film 20 is a resin film having a thickness of less than 0.1 mm.

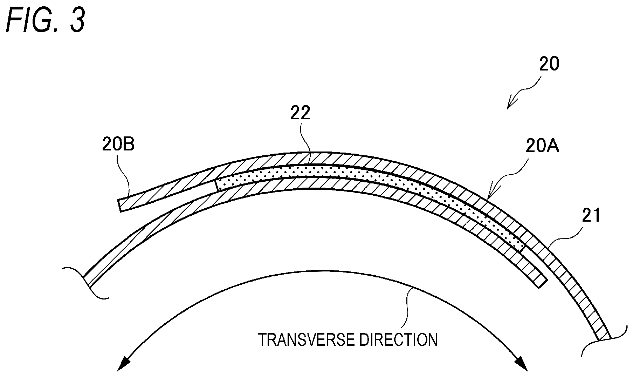

FIG. 3 is a partially enlarged view of III in FIG. 2. As illustrated in FIGS. 2 and 3, the plastic film 20 includes an overlapping portion 20A in which the plastic films 20 overlap each other at a part in a circumferential direction covering the periphery of the optical fiber ribbon 10 and the water absorbing fiber 30. A width of the overlapping portion 20A is preferably 10% or more and less than 30% of a width in a transverse direction in a state in which the plastic film 20 is developed. A ratio of the width of the overlapping portion 20A to the width of the plastic film 20 may be referred to as a lap ratio. That is, lap ratio = length of overlapping portion/(length of non-overlapping portion + length of overlapping portion × 2).

As illustrated in FIG. 3, the plastic film 20 includes a base material 21 and an adhesive resin layer 22. The base material 21 is formed of, for example, polyethylene terephthalate (PET). The adhesive resin layer 22 is provided on at least one side of the base material 21. As illustrated in FIG. 3, the adhesive resin layer 22 is formed on an inner side of the plastic film 20 constituting an outer surface of the optical fiber unit 1 among the plastic film 20 constituting the overlapping portion 20A. The adhesive resin layer 22 is preferably formed of, for example, an adhesive polyolefin resin. An example of the adhesive polyolefin resin is adhesive polyethylene.

The adhesive resin layer 22 has a melting point of lower than 200°C. By heating the adhesive resin layer 22 to a temperature equal to or higher than the melting point of the adhesive resin layer 22, and then cooling to a temperature lower than the melting point of the adhesive resin layer 22, the plastic films 20 constituting the overlapping portion 20A are melted by the adhesive resin layer 22. Accordingly, the plastic film 20 is maintained in an annular shape in a cross-sectional view. At this time, it is preferable that the base material 21 is not deformed due to heat at a temperature at least equal to or higher than the melting point of the adhesive resin layer 22.

The adhesive resin layer 22 may be formed only in the overlapping portion 20A. The adhesive resin layer 22 may not be provided at an end portion 20B (an end portion exposed to an outer periphery of the unit) in the transverse direction of the plastic film 20 constituting the overlapping portion 20A. In this case, the end portion 20B of the overlapping portion 20A is free from the overlapping plastic films 20.

The water absorbing fiber 30 is capable of absorbing water entering the inside of the optical fiber unit 1 and prevent water from entering the unit in the longitudinal direction. As illustrated in FIG. 2, the plastic film 20 is formed in a manner of covering the water absorbing fiber 30 in a state of being in contact with the water absorbing fiber 30. Before the adhesive resin layer 22 is melted, the optical fiber ribbon 10 and the water absorbing fiber 30 covered with the plastic film 20 may be referred to as an optical fiber ribbon unit 1A.

As illustrated in FIG. 1, a two-dimensional code C capable of accessing identification information is applied to an outer surface of the plastic film 20. The identification information may include, for example, information such as a manufacturing company, a manufacturing year, a management number, an optical fiber number, an allowable tension, an allowable bending diameter, and a use temperature.

The plastic film 20 may be made of a material having flame retardance with a limitation oxygen index of 40 or more. The limitation oxygen index is a minimum oxygen concentration necessary for combustion continuation specified in JIS K7201. The plastic film 20 may be formed of biodegradable plastic. Further, a water absorbing polymer may be applied to the outer surface of the plastic film 20.

As illustrated in FIG. 1, the plastic film 20 may be colored in two or more colors in the longitudinal direction of the plastic film 20. In this case, the plastic film 20 may include a colored layer (not illustrated) between the base material 21 and the adhesive resin layer 22, or a coloring pigment may be mixed with the base material or the adhesive resin layer.

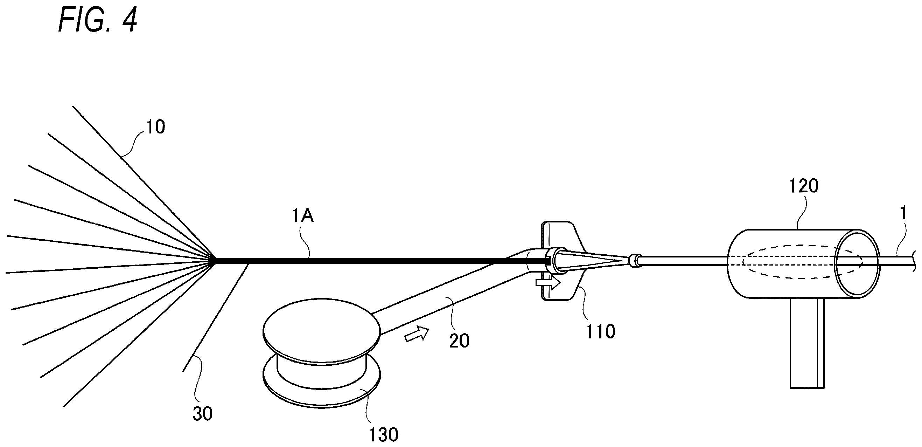

Next, a manufacturing method for manufacturing the optical fiber unit 1 will be described. FIG. 4 is a schematic view of a manufacturing apparatus for manufacturing the optical fiber unit 1.

First, the optical fiber ribbon 10 is extended from a plurality of supply bobbins around which the optical fiber ribbon 10 is wound, the plurality of optical fiber ribbons 10 are twisted and bundled, and the optical fiber ribbon unit 1A is formed along the water absorbing fiber 30. The optical fiber ribbon unit 1A is fed to a film forming unit 110.

The optical fiber ribbon unit 1A and the plastic film 20 obtained by forming the adhesive resin layer 22 on the base material 21 are supplied to the film forming unit 110. The plastic film 20 is extended from a bobbin 130 and fed to the film forming unit 110. The film forming unit 110 winds the plastic film 20 in a manner of covering the optical fiber ribbon unit 1A. At this time, it is preferable that the plastic film 20 is longitudinally wrapped so as to be wound along a longitudinal direction of the optical fiber ribbon unit 1A.

The optical fiber ribbon unit 1A is fed to a heat melting portion 120 in a state in which the plastic film 20 is wound. The optical fiber ribbon unit 1A fed to the heat melting portion 120 is heated to a temperature equal to or higher than the melting point of the adhesive resin layer 22. In this state, the adhesive resin layer 22 is melted.

When the optical fiber ribbon unit 1A passes through the heat melting portion 120 and is cooled to a temperature equal to or lower than the melting point of the adhesive resin layer 22, the adhesive resin layer 22 solidifies. Accordingly, as illustrated in FIG. 3, the base materials 21 of the plastic film 20 constituting the overlapping portion 20A are melted with the adhesive resin layer 22 interposed therebetween, and the plastic film 20 is formed in an annular shape in a manner of covering the periphery of the optical fiber ribbon unit 1A.

According to the optical fiber unit 1 of the present embodiment, the plurality of optical fiber ribbons 10 are covered with the plastic film 20 having a thickness of less than 0.1 mm, and thus the optical fiber mounting density can be easily improved. The plastic film 20 is formed in an annular shape in a manner of covering the periphery of the plurality of optical fiber ribbons 10 by adhesion by the adhesive resin layer 22, and thus the occurrence of molding defects is prevented and a manufacturing yield of the optical fiber unit 1 is improved as compared with a case in which a tube is formed around the optical fiber ribbons 10 by extrusion molding.

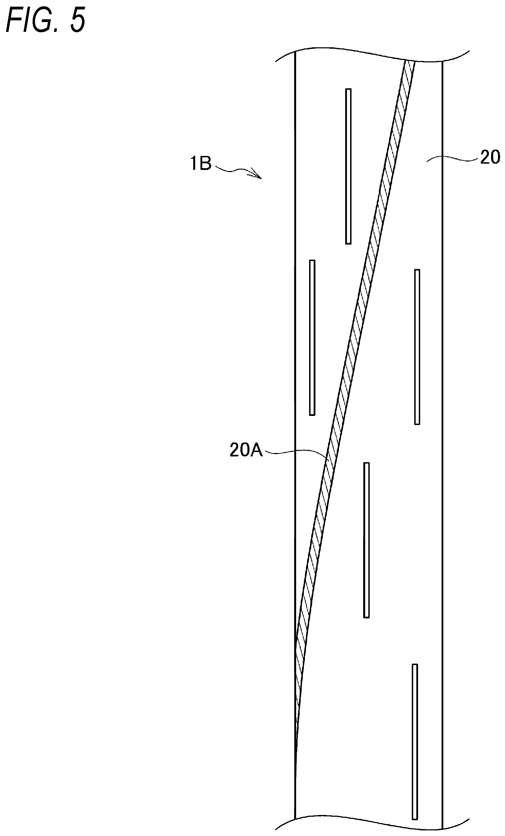

Next, another example of the optical fiber unit will be described with reference to FIG. 5. In the plastic film 20 of an optical fiber unit 1B according to another example, a cleft is formed in a part in the longitudinal direction. This facilitates an operation of taking out the optical fiber 11 or the optical fiber ribbon 10 from the optical fiber unit 1 at the time of construction.

In the optical fiber unit 1B illustrated in FIG. 5, the overlapping portion 20A is formed in a spiral shape in the longitudinal direction of the optical fiber unit 1B. Such an optical fiber unit 1B can be manufactured, for example, by rotating the bobbin 130 and a part of the film forming unit 110 illustrated in FIG. 4 around the optical fiber ribbon unit 1A.

The overlapping portion 20A is formed in a spiral shape in the longitudinal direction of the optical fiber unit 1B, and thus the overlapping portion 20A is arranged without being concentrated on a part of the optical fiber unit in the circumferential direction. Accordingly, when the optical fiber unit 1B is bent, the overlapping portion 20A does not concentrate on an outer side of the bending (a region in which the unit extends) or an inner side of the bending (a region in which the unit contracts), and thus the optical fiber ribbon 10 can be prevented from protruding unintentionally from the plastic film 20.

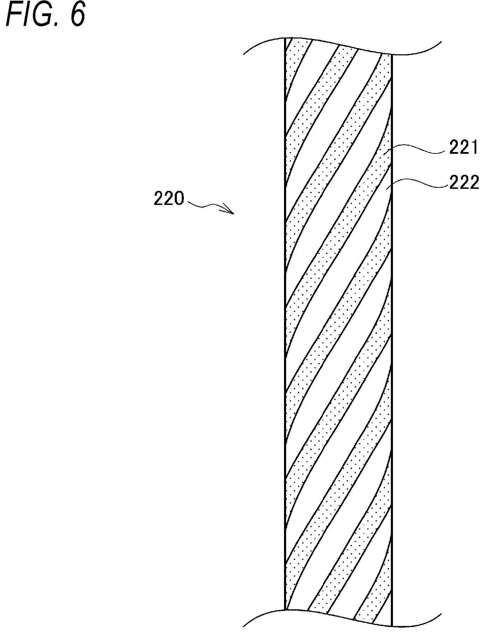

Next, an example of a form of the adhesive resin layer 22 in a plastic film 220 will be described with reference to FIG. 6. A vertical direction in FIG. 6 is the longitudinal direction of the optical fiber unit 1 and the plastic film 220. As illustrated in FIG. 6, an adhesive portion 221 on which the adhesive resin layer 22 is formed and a non-adhesive portion 222 on which the adhesive resin layer 22 is not formed are alternately provided in the longitudinal direction of the optical fiber unit 1. As illustrated in FIG. 6, the adhesive portion 221 and the non-adhesive portion 222 are formed in a manner of obliquely intersecting with each other in the longitudinal direction of the optical fiber unit 1 and the plastic film 220.

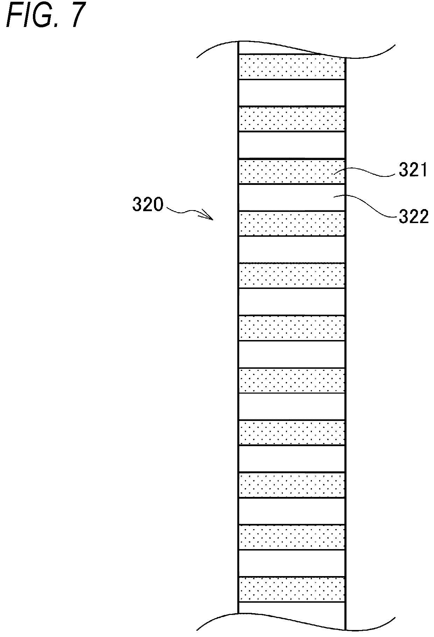

FIG. 7 illustrates another example of the form of the adhesive resin layer 22 in a plastic film 320. A vertical direction in FIG. 7 is the longitudinal direction of the optical fiber unit 1 and the plastic film 320. Also as illustrated in FIG. 7, an adhesive portion 321 on which the adhesive resin layer 22 is formed and a non-adhesive portion 322 on which the adhesive resin layer 22 is not formed are alternately provided in the longitudinal direction of the optical fiber unit 1. As illustrated in FIG. 7, the adhesive portion 321 and the non-adhesive portion 322 are formed in a manner of obliquely intersecting with each other in the longitudinal direction of the optical fiber unit 1 and the plastic film 320.

As illustrated in FIG. 6 or 7, the adhesive portion 221 or 321 on which the adhesive resin layer 22 is formed and the non-adhesive portion 222 or 322 on which the adhesive resin layer 22 is not formed are alternately provided in the longitudinal direction of the optical fiber unit 1. Accordingly, the plastic film 220 or 320 can be formed in a manner of covering the optical fiber ribbon 10 by the adhesive portion 221 or 321, and since the adhesive portion 221 or 321 and the non-adhesive portion 222 or 322 are alternately provided in the overlapping portion, the non-adhesive portions 222 or 322 is provided intermittently, and removability of the optical fiber 11 and disassemblability of the optical fiber unit 1 can be improved.

In order to allow the plastic film 20 to sufficiently protect the optical fiber ribbon 10, a width of the non-adhesive portion 222 or 322 in the longitudinal direction of the optical fiber unit 1 and the plastic film 20 is preferably 10 mm or more and 50 mm or less.

### OPTICAL FIBER CABLE INCLUDING OPTICAL FIBER UNIT

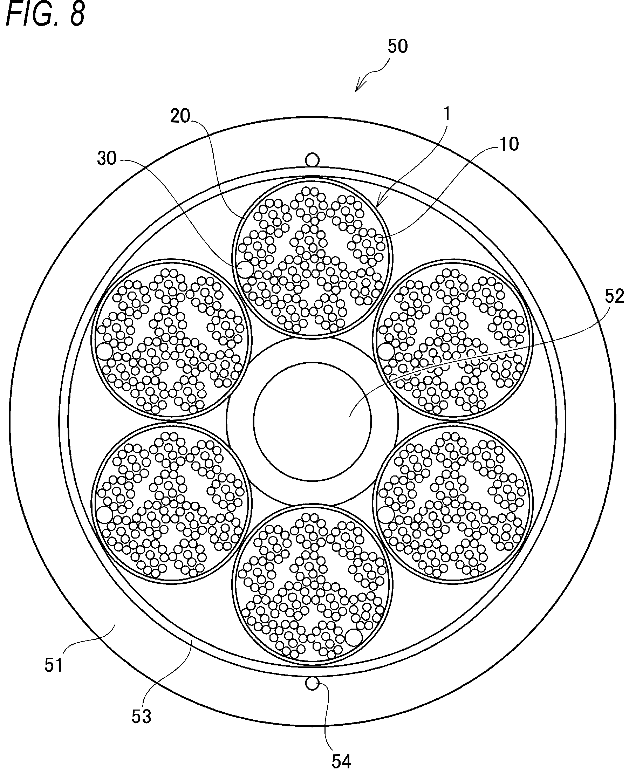

FIG. 8 is a cross-sectional view of an optical fiber cable 50. The optical fiber cable 50 is a loose tube type cable including a plurality of optical fiber units 1, a cable sheath 51 covering the plurality of optical fiber units 1, a tension member 52, a water absorbing tape 53, and tear strings 54.

The tension member 52 is made of, for example, fiber reinforced plastic (FRP) or aramid fiber. The tension member 52 prevents excessive stress from being applied to the optical fiber 11 inside the optical fiber cable 50. As illustrated in FIG. 8, one tension member 52 is arranged at a center of the optical fiber cable 50 in a cross-sectional view, but an arrangement position and the number of the tension member 52 are not limited.

Six optical fiber units 1 are provided around the tension member 52. The water absorbing tape 53 is disposed in a manner of covering the six optical fiber units 1. Since the water absorbing tape 53 is provided in the optical fiber cable 50, water resistance of the optical fiber cable 50 is improved.

The cable sheath 51 covers the plurality of optical fiber units 1 and the water absorbing tape 53. The cable sheath 51 is made of a hard material such as high-density polyethylene. The hard material is, for example, a resin material having a Young's modulus of 800 MPa or more and 1200 MPa or less.

The tear string 54 is provided outside the water absorbing tape 53 in a manner of being embedded in the cable sheath 51. By pulling the tear string 54, the cable sheath 51 can be torn.

By providing the optical fiber unit 1 according to the present disclosure in such an optical fiber cable 50, it is possible to improve the optical fiber mounting density of the optical fiber cable 50 and to improve the yield of the optical fiber cable 50.

Next, characteristic evaluation results of the optical fiber unit 1 when manufacturing conditions of the optical fiber unit 1 are changed will be described. The characteristic evaluation of the optical fiber unit 1 was verified on the basis of transmission loss, optical fiber removability, and manufacturability.

The transmission loss is an evaluation related to a transmission loss characteristic of the optical fiber unit 1 when the optical fiber mounting density is 3.8 core/mm². Evaluation A indicates that the transmission loss is 0.25 dB/km or less. Evaluation B indicates that the transmission loss is larger than 0.25 dB/km and 0.3 dB/km or less. Evaluation C indicates that the transmission loss is larger than 0.3 dB/km.

The optical fiber removability is an evaluation related to whether the optical fiber 11 can be removed from the optical fiber unit 1 by peeling the overlapping portion 20A by hand. Evaluation A indicates a case in which the optical fiber 11 is removed from the optical fiber unit 1 by peeling the overlapping portion 20A by hand. Evaluation A+ indicates a case in which the optical fiber 11 can be easily removed among those satisfying the evaluation A. Evaluation C indicates a case in which the optical fiber 11 cannot be removed from the optical fiber unit 1.

The manufacturability is an evaluation related to whether the plastic film 20 can be melted when the optical fiber unit 1 is manufactured at a constant linear velocity. Evaluation A indicates that the plastic film 20 is reliably melted in the longitudinal direction of the optical fiber unit 1. Evaluation B indicates that the plastic film 20 is not melted in a part of the longitudinal direction of the optical fiber unit 1. Evaluation C indicates that the plastic film 20 is not melted in the entire longitudinal direction of the optical fiber unit 1.

### Verification 1: Thickness of Plastic Film 20

The thickness of the plastic film 20 was changed to verify the transmission loss, the optical fiber removability, and the manufacturability. Results of the verification 1 are illustrated in Table 1.

**Table 1**

| Sample | Plastic film | | | Characteristic evaluation of optical fiber unit | | |
|---|---|---|---|---|---|---|
| | Thickness (mm) | Melting point of adhesive resin layer (°C) | Lap ratio (%) | Transmission loss | Optical fiber removability | Manufacturability |
| 1 | 0.005 mm | 100°C | 30% | A | A | A |
| 2 | 0.015 mm | 100°C | 30% | A | A | A |
| 3 | 0.030 mm | 100°C | 30% | A | A | A |
| 4 | 0.1 mm | 100°C | 30% | C | A | A |
| 5 | 0.015 mm | 200°C | 30% | A | A | C |
| 6 | 0.015 mm | 150°C | 30% | A | A | A |
| 7 | 0.015 mm | 70°C | 30% | A | A | B |
| 8 | 0.015 mm | 100°C | 50% | A | C | B |
| 9 | 0.015 mm | 100°C | 10% | A | A | A |
| 10 | 0.015 mm | 100°C | 5% | A | A | C |

In optical fiber units of Sample 1, Sample 2, and Sample 3, all of the transmission loss, the optical fiber removability, and the manufacturability were good. However, in Sample 4 in which a thickness of a plastic film was 0.1 mm, the optical fiber unit was not sufficiently deformed, and thus the evaluation of the transmission loss was deteriorated. These results show that the thickness of the plastic film is preferably less than 0.1 mm.

### Verification 2: Melting Point of Adhesive Resin Layer 22

The melting point of the adhesive resin layer 22 was changed to verify the transmission loss, the optical fiber removability, and the manufacturability. Results of the verification 2 are illustrated in Table 1.

In optical fiber units of Samples 2 and 6, all of the transmission loss, the optical fiber removability, and the manufacturability were good. However, regarding Sample 5 in which a thickness of a plastic film was 0.015 mm similarly to Samples 2 and 6 and a melting point of an adhesive resin layer was 200°C, the plastic films did not melt, and thus the evaluation of the manufacturability was deteriorated. Regarding Sample 7 in which a thickness of a plastic film was 0.015 mm similarly to Samples 2, 5, and 6 and a melting point of an adhesive resin layer was 70°C, although the plastic films were melted, melting began before the plastic film was wound around the optical fiber ribbon unit, and thus the evaluation of the manufacturability was slightly deteriorated. These results show that the melting point of the adhesive resin layer is more preferably 70 degrees or higher and lower than 200 degrees.

### Verification 3: Lap Ratio

The lap ratio was changed to verify the transmission loss, the optical fiber removability, and the manufacturability. Results of the verification 3 are illustrated in Table 1.

In optical fiber units of Samples 2 and 9, all of the transmission loss, the optical fiber removability, and the manufacturability were good. However, regarding Sample 8 in which the lap ratio was 50%, it was difficult to remove the optical fiber by hand, and thus the evaluation of the optical fiber removability was deteriorated. Regarding Sample 8, peeling of melting between the plastic films occurred at a part in the longitudinal direction of the optical fiber unit, and thus the manufacturability was slightly deteriorated. Regarding Sample 10 in which the lap ratio was 5%, the plastic films did not sufficiently melt, and the optical fiber ribbon protrudes from the plastic film, and thus the evaluation of the manufacturability was deteriorated. These results show that the lap ratio is preferably 10% or more and 30% or less.

### Verification 4: Width of Non-Adhesive Portion

Regarding the plastic film in which the adhesive portion 221 and the non-adhesive portion 222 are alternately formed as illustrated in FIG. 6, the width of the non-adhesive portion 222 in the longitudinal direction of the optical fiber unit 1 is changed to verify the transmission loss, the optical fiber removability, and the manufacturability. Results of the verification 4 are illustrated in Table 2. In each sample, the thickness of the plastic film was 0.015 mm.

**Table 2**

| Sample | Plastic film | | | Characteristic evaluation of optical fiber unit | | |
|---|---|---|---|---|---|---|
| | Width of Non-Adhesive Portion (mm) | Melting point of adhesive resin layer (°C) | Lap ratio (%) | Transmission loss | Optical fiber removability | Manufacturability |
| 11 | 1 mm | 100°C | 30% | A | A | A |
| 12 | 10 mm | 100°C | 30% | A | A+ | A |
| 13 | 50 mm | 100°C | 30% | A | A+ | A |
| 14 | 100 mm | 100°C | 30% | A | A+ | C |

In an optical fiber unit of Sample 11, all of the transmission loss, the optical fiber removability, and the manufacturability were good. Further, regarding optical fiber units of Samples 12 and 13, since the optical fiber removability was further favorable, the evaluation of the optical fiber removability was improved. However, regarding Sample 14 in which the width of the non-adhesive portion was 100 mm, since the optical fiber ribbon protrudes from the non-adhesive portion, the evaluation of the manufacturability was deteriorated. These results show that the width of the non-adhesive portion in the longitudinal direction of the optical fiber unit is preferably 10 mm or more and 50 mm or less.

Although the present disclosure has been described in detail with reference to specific embodiments, it is apparent to those skilled in the art that various changes and modifications can be made without departing from the spirit and scope of the present disclosure. In addition, the number, positions, shapes, and the like of the constituent members described above are not limited to the embodiments described above, and can be changed to the number, positions, shapes, and the like suitable for carrying out the present disclosure.

The present embodiment describes an aspect in which the optical fiber 11 provided inside the optical fiber unit 1 forms the optical fiber ribbon 10. However, the optical fiber 11 provided inside the optical fiber unit 1 may be covered with and stored in a plastic film in a simply bundled state.

### REFERENCE SIGNS LIST

1: optical fiber unit
1A: optical fiber ribbon unit
10: optical fiber ribbon
11: optical fiber
20: plastic film
20A: overlapping portion
20B: end portion
21: base material
22: adhesive resin layer
30: water absorbing fiber
50: optical fiber cable
51: cable sheath
52: tension member
53: water absorbing tape
54: tear string
110: film forming unit
120: heat melting portion
130: bobbin
221: adhesive portion
222: non-adhesive portion
C: two-dimensional code

## Claims

1. An optical fiber unit, comprising:
a plurality of optical fibers or optical fiber ribbons; and
a plastic film having a thickness of less than 0.1 mm and covering a periphery of the plurality of optical fibers or the plurality of optical fiber ribbons, wherein
the plastic film includes a base material and an adhesive resin layer provided on at least one side of the base material,
the adhesive resin layer has a melting point of lower than 200°C, and
the plastic film is formed in an annular shape in a cross-sectional view by partially melting a part of the plastic film by the adhesive resin layer.

2. The optical fiber unit according to claim 1, wherein
the adhesive resin layer is formed of an adhesive polyolefin resin.

3. The optical fiber unit according to claim 1 or 2, wherein
the plastic film includes an overlapping portion in which the plastic films overlap each other at a part in a circumferential direction covering a periphery of the plurality of optical fibers or the plurality of optical fiber ribbons, and
the adhesive resin layer is formed only on the overlapping portion.

4. The optical fiber unit according to any one of claims 1 to 3, wherein
the plastic film includes an overlapping portion in which the plastic films overlap each other at a part in a circumferential direction covering a periphery of each of the plurality of optical fibers or the plurality of optical fiber ribbons, and
the overlapping portion has a width of 10% or more and 30% or less with respect to a width of the plastic film in a transverse direction.

5. The optical fiber unit according to any one of claims 1 to 4, wherein
the plastic film includes an overlapping portion in which the plastic films overlap each other at a part in a circumferential direction covering a periphery of the plurality of optical fibers or the plurality of optical fiber ribbons, and
an end portion of the plastic film in a transverse direction which constituting the overlapping portion is not provided with the adhesive resin layer.

6. The optical fiber unit according to any one of claims 1 to 5, wherein
a part of the plastic film in a longitudinal direction is formed with a cleft.

7. The optical fiber unit according to any one of claims 1 to 6, further comprising:
a water absorbing fiber extending along the plurality of optical fibers or the plurality of optical fiber ribbons, wherein
the plastic film is formed in a manner of covering the water absorbing fiber in a state of being in contact with the water absorbing fiber.

8. The optical fiber unit according to any one of claims 1 to 7, wherein
a resin constituting surfaces of the plurality of optical fibers or the plurality of optical fiber ribbons contains a release agent.

9. The optical fiber unit according to any one of claims 1 to 8, wherein
the plastic film is made of a material having flame retardance with a limitation oxygen index of 40 or more.

10. The optical fiber unit according to any one of claims 1 to 9, wherein
an optical fiber mounting density is 10 cores/mm² or higher in the optical fiber unit.

11. The optical fiber unit according to any one of claims 1 to 10, wherein
the plastic film includes an overlapping portion in which the plastic films overlap each other at a part in a circumferential direction covering a periphery of the plurality of optical fibers or the plurality of optical fiber ribbons, and
an adhesive portion on which the adhesive resin layer is formed and a non-adhesive portion on which the adhesive resin layer is not formed are alternately provided in the overlapping portion in a longitudinal direction of the optical fiber unit.

12. The optical fiber unit according to any one of claims 1 to 11, wherein
the plastic film is formed of biodegradable plastic.

13. The optical fiber unit according to any one of claims 1 to 12, wherein
a water absorbing polymer is applied to an outer surface of the plastic film.

14. The optical fiber unit according to any one of claims 1 to 13, wherein
a two-dimensional code configured to access identification information on the optical fiber unit is applied to an outer surface of the plastic film.

15. The optical fiber unit according to any one of claims 1 to 14, wherein
the plastic film includes an overlapping portion in which the plastic films overlap each other at a part in a circumferential direction covering a periphery of the plurality of optical fibers or the plurality of optical fiber ribbons, and
the overlapping portion is formed in a spiral shape in a longitudinal direction of the optical fiber unit.

16. The optical fiber unit according to any one of claims 1 to 15, wherein
the plastic film is colored in two or more colors.

17. An optical fiber cable, comprising:
a plurality of the optical fiber unit according to any one of claims 1 to 16; and
a cable sheath covering the plurality of the optical fiber unit.
